# EUROPEAN PATENT APPLICATION

(11) **EP 2 110 757 A1**
(43) Date of publication of application: **21.10.2009**
(21) Application number: 08016503.8
(22) Date of filing: 18.09.2008
(51) Int. Cl.: G06F 15/78, H04B 7/06

(54) **Device and method for parallelizing multicarrier demodulation**

(30) Priority: 14.04.2008 EP 08007273
(71) Applicant: IMEC, 3001 Leuven (BE)
(72) Inventor: Palkovic, Martin, 3001 Leuven (BE)
(74) Representative: BiiP cvba

(57) **Abstract**

The present invention is related to a device for demodulating a stream of data symbols being part of a multicarrier data stream. The device comprises a platform capable of running processes in parallel. On the platform a parallel code is mapped for demodulating the data symbols. The parallel code is arranged for determining from at least one previously processed symbol information for demodulating a currently processed data symbol of the multicarrier data stream. The device further comprises parallelisation means for parallelising symbols or groups of symbols of the stream of data symbols code according to a modulo-N symbol splitting of the stream of data symbols, whereby N denotes the number of processes that can run in parallel on the platform. The parallelisation means are further arranged for applying the parallelised stream to the parallel code.

## Description

### Field of the Invention

The present invention relates to the field of communication devices, in particular wireless communication devices, capable of parallel processing a received data stream. The invention also relates to a method for operating such device.

### Background of the Invention

In the past decades, the performance of a single processor core has increased exponentially. This was necessary to catch up with the growing complexity of applications required by the market. Till now, the performance growth was achieved by drastic increase of the processor core clock speed up to current 4.3GHz. Nowadays, the further increase of performance by increasing the clock frequency is not feasible due to power dissipation, leakage and scaling problems. However, the market still demands more and more complex applications. To deal with this demand, all modern processor units consist of multi-processor System-on-Chip (SoC) with multiple processing cores. The question is how to parallelize the modern applications to run on these modern processors.

Nowadays, several key requirements are expected from every electronic product on the market, like connectivity, flexibility, reconfigurability and bandwidth. The connectivity is ensured by each device having an Ethernet module. Flexibility is guaranteed by making the connectivity wireless, e.g., by using Wireless Local Area Network (WLAN) modules. Reconfigurability is achieved by using the Software Defined Radio (SDR) solutions instead of direct VLSI implementation' (which is still a challenging task when going to modes with higher bandwidth - see e.g. the paper "An Integrated Draft 802.11n Compliant MIMO Baseband and MAC Processor", P.Petrus et a/., Proc. IEEE Intl. Solid-State Circuits Conf. (ISSCC), San Francisco, pp.266-269, Feb.2007). Software-defined radio (SDR) is a collection of hardware and software technologies that enable reconfigurable system architectures for wireless networks and user terminals. SDR provides an efficient and comparatively inexpensive solution to the problem of building multi-mode, multi-band, multi-functional wireless devices that can be adapted, updated or enhanced by using software upgrades. As such, SDR can be considered an enabling technology that is applicable across a wide range of areas within the wireless community.
Bandwidth is increased every time a new standard is released, e.g., going from 802.11b to 802.11g and the planned 802.11n. The higher bandwidth requires a higher processor performance which cannot be achieved by simply increasing the clock speed as it has been done in the past. Thus, higher WLAN modes such as 802.11 n require running the application on the embedded multi-processor SoC instead of single processor with high clock speed.

However, the problem of parallelisation also pops up in case a single processor with multi-threading is applied. The application has to be distributed over multiple threads that utilize the single processor resources in parallel. Thus, the goals of the parallelization are similar as in the multi-processor case. However, in the multi-threading case the communication is usually cheaper (when transferring data from one thread to the other one within one single processor) and depending on the implementation it can be less flexible in time when the communication occurs than the multi-processor case. Those differences can result in different best parallelization solutions for multi-threading and muiti-processor.

A concrete situation wherein the problem tackled by the present invention occurs, is now briefly described by means of a 40 MHz Multiple Input Multiple Output (MIMO) Space Division Multiplexing (SDM) - Orthogonal Frequency Division Multiplexing (OFDM) application. An instance of a platform for which the application can be parallelized is provided as well.

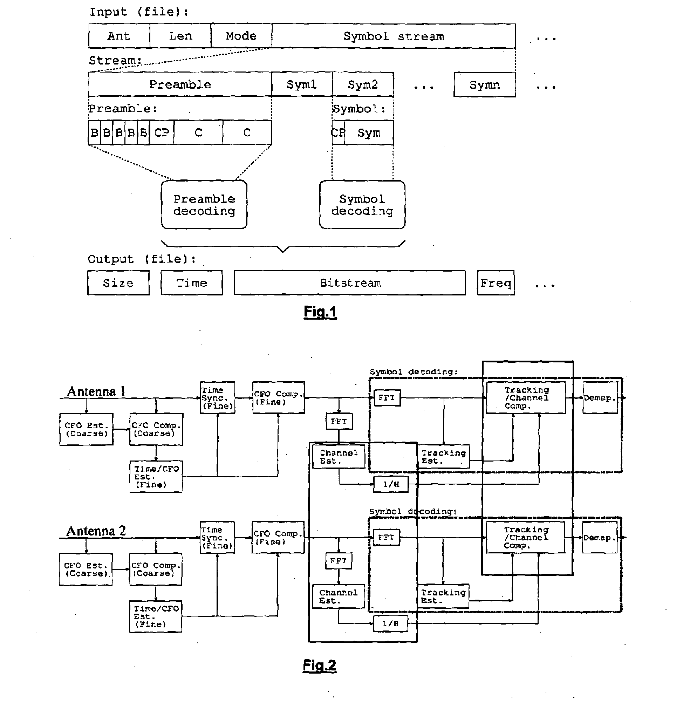

Before explaining the application itself, a brief explanation of the incoming stream depicted in Fig. 1 is given. Except for the stream itself, the input to the application is the number of antennas (Ant) (two in this particular case), the length (Len) of the stream and the mode. The mode can be Binary Phase Shift Keying (BPSK), Quadrature Phase Shift Keying (QPSK), Quadrature Amplitude Modulation (QAM)-16 or QAM-64 and determines the number of bits coded in one symbol per carrier and per antenna; 1, 2, 4 or 6. The incoming symbol stream consists of the preamble and the individual symbols (payload data). The received stream is decoded in two separate parts, the preamble decoding and the symbol decoding. This yields the size of the output, the time offset, the decoded bit stream and the frequency offset (see bottom of Fig.1).

As depicted in Fig.1 the symbol stream has two parts, the preamble and the payload data. Because the MIMO system in this example has two antennas, actually two substreams are present in the stream, one from each antenna. The substreams are independent except for the channel estimation and equalization part where they are mixed. This is depicted in Fig. 2.

The preamble consists of known symbols as shown in Fig.1. First, the coarse and fine time offset and coarse and fine carrier frequency offset (CFO) are determined from the preamble and the preamble is compensated correspondingly. Then, the long Cyclic Prefix (CP) is removed and the 128 point Fast Fourier Transformation (FFT) is applied on the symbols. The channel estimation is performed on C symbols. The Minimum Mean Square Error (MMSE) equalizer matrix is then computed from the estimated channel.

For the payload data the timing and frequency offsets are first compensated for. The payload data from the two antennas is processed per OFDM symbol that consists of 160 samples (4 µs per symbol @ 40 MHz). After the time and frequency compensation, the CP is removed (48 samples) and 128 point FFT is performed. Then, the 14 zero carriers are removed and 6 pilot carriers are used for the tracking. The remaining 108 payload carriers are equalized in each substream, providing two substreams of estimated symbols (one for each antenna), which are demodulated and demapped. Reference is made to US 6760300 and EP 1030489, wherein an apparatus for receiving and/or transmitting signals using orthogonal frequency division multiplexing is described more in detail.

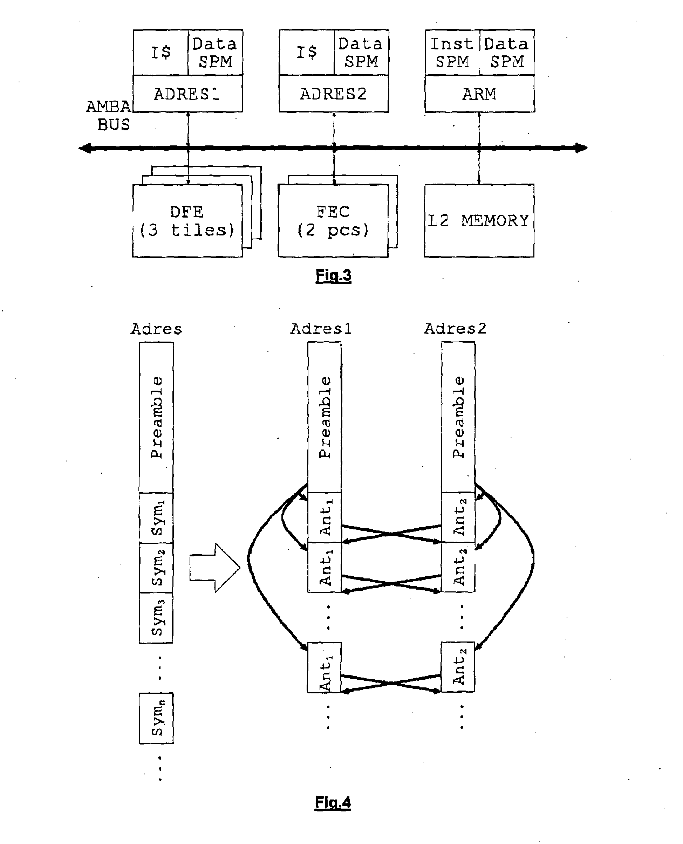

A schematic view on the platform instance is shown in Fig.3. The platform consists of two ADRES processors ADRES1 and ADRES2. These processors are extensively described in the paper "ADRES: an architecture with tightly coupled VLIW processor and coarse-grained configurable matrix" (B.Mei, et al., Proc. IEEE Conf. on Field-Programmable Logic and its Applications (FPL), Lisbon, pp.61-70, Sep.2003*).* Each processor has its L1 data Scratch Pad Memory (SPM) and L1 instruction memory (cache), ARM processor with its separate L1 data and instruction SPM, three Digital Front End (DFE) tiles, two Forward Error Correction (FEC) decoders and a L2 memory. All the components communicate via the 32 bit Advanced Microcontroller Bus Architecture (AMBA) bus running at 200 MHz. The platform uses common memory map and has only one master, namely the ARM processor. Thus, only the ARM processor can, based on the incoming interrupts, start/stop the other components on the platform (e.g., ADRES cores) or copy data from/to those components, e.g., from/to the data SPM of ADRES core. The copying of data can be performed directly via the ARM or the ARM can program one of the two Direct Memory Access (DMA) controllers on the platform to do the actual copying. To summarize, the ARM can access the data SPM of both ADRES processors (and other components) and the ADRES processors can access only their own data SPM. Reference is made to WO2007/132016 wherein a digital receiver capable of receiving, demodulating and decoding packetised data is disclosed, WO2007/003370 relating to a coarse-grained configurable signal processing device and WO2007/106959 disclosing such a signal processing device adapted for simultaneous processing of at least two process threads in a multiprocessing manner.

For this 40 MHz MIMO SDM-OFDM application parallelization is an obvious choice, as the application uses two antennas. At first sight, since the initial code processes each subfunction of the receiver for an entire burst of data (multiple symbols), and for all antennas and hence the outer loop is the antenna loop, it seems a good choice to consider a parallelization where each antenna stream is demodulated and decoded on a separate ADRES processor. However, the streams from the two antennas are mixed before the channel estimation and equalization. In those parts the whole symbols has to be transferred from one antenna to another to be able to perform channel compensation, resulting in 432 bytes communication per one OFDM symbol (see Fig.4). When a real-time processing of the symbol is assumed, i.e., 4 µs the bandwidth need for this communication is 432/4 ≈ 100 MB/s. When comparing to the bandwidth of the bus which is 320 MB/s (assuming 80% effectives of the bursts), this is approximately 1/3 of the bandwidth of the bus. Reference is made to US 6937665, US2005/276348 and EP 1047209 describing multi-user OFDM and EP 1392404, US 2004 0252632 describing method for optimals multi-user spatial multiplexing MIMO transmission and apparatus suited therefore.

Application US2005/254486 discloses a signal processing method wherein a single antenna data signal (e.g., in a OFDM based wireless modem) containing symbols requiring fast processing, is divided into two symbol streams. These can be streams containing odd and even numbered symbols. The two symbol streams are processed simultaneously in at least two relatively slower parallel-connected processors. The processed first and second streams are combined to provide a processed output signal in a given time interval. OFDM symbols that need to be processed within a short time interval as per IEEE standard 802.11a may thus be handled on two parallel connected slower processors. Thus, processors that are unable to keep pace with the amount of processing each OFDM symbol requires, may be used. Several parallel/series configurations of processors, or processors with multiple internal execution paths may be used in the proposed method. However, the proposed approach relies on the fact that it can usually be ensured that no communication is required between the processors. This of course simplifies the design. This can be arranged by making both processors do the computation of common parameters independently.

Consequently, the present invention aims to provide an improved device and method for parallelising a received multi-carrier data stream that overcomes the limitations of the prior art solutions.

### Summary of the Invention

The present invention relates to a device for demodulating a stream of data symbols that are part of a multicarrier data stream. The device comprises a platform capable of running processes in parallel, i.e. the platform provides parallel processing paths. On the platform a parallel code is mapped for demodulating the data symbols. The parallel code is arranged for determining from at least one previously processed symbol information for demodulating a currently processed data symbol of the multicarrier data stream. The device further comprises parallelisation means for parallelising symbols or groups of symbols of the stream of data symbols code according to a modulo-N symbol splitting of the data symbol stream, whereby N denotes the number of processes that can run in parallel on the platform. The parallelisation means are further arranged for applying the parallelised stream to the parallel code.

In a preferred embodiment the platform comprises at least two programmable processors.

In another preferred embodiment the platform comprises a programmable processor arranged for multi-threading.

In case the platform comprises at least two programmable processors it is advantageous that at least one programmable processor is arranged for multi-threading.

The device preferably comprises at least two antennas.

The parallelisation means may be a direct memory access (DMA) controller.

Preferably the platform is arranged for applying single instruction multiple data processing.

In an advantageous embodiment the code for demodulating is part of a wideband-CDMA transmission protocol. Alternatively, it is part of an OFDM transmission protocol.

Preferably the platform further comprises at least one processing module for detecting packets of the received data symbols. The at least one processing module is advantageously provided with buffering means for storing a portion of the parallelised stream.

In another preferred embodiment the platform further comprises a general purpose processor arranged for acting as master of the platform. Such general purpose processor is advantageously an ARM processor.

In another aspect the invention relates to a method of demodulating multi-carrier data received as a plurality of signals, whereby each signal originates from a separate antenna. Each signal comprises a set of symbols to be demodulated. The method comprises the steps of :
- dividing the sets of symbols to be processed into a plurality of symbol groups, each symbol group comprising symbols of at least two of said sets,
- demodulating the symbol groups in different processing paths and communicating carrier tracking information from a first processing path to a second processing path, said carrier tracking information being obtained by at least partially demodulating a first symbol group in a first processing path, a second symbol group being demodulated in said second processing path.

In a preferred embodiment the step of demodulating the symbol groups in at least one of said processing steps further comprises at least partially demodulating symbol groups of different signals in different subprocessing paths (SIMD). Each of said processing paths is advantageously provided with buffering means for storing at least a portion of said symbols.

In an advantageous embodiment the method is executed on a coarse grain reconfigurable signal processing device. The coarse grain reconfigurable signal processing device is preferably arranged into a device with at least two non-overlapping processing units, whereby each processing unit defines a processing path. Preferably at least part of the carrier tracking information is communicated within the coarse grain reconfigurable signal processing device.

The selection of the amount of groups (and consequently the amount of parallel processing paths), the amount of symbols per group, the amount of sub processing groups (and the assigning of antenna signals thereto) is done to realize real-time processing (meaning to process as required by the communication standard) while satisfying power consumption constraints imposed on the platform (by allowing use of lower clocked processors). The present invention hence includes methods for (automated) selection of the appropriate parameters, in particular by use of appropriate modelling tools, multi-processor parallelisation evaluation tools and/or automatic code generation, either separately or in combination. The method includes the use of a template for the communication platform to be used and/or a template for the processor to be used, whereby the method is adapted to explore the symbol grouping and splitting as indicated above.

The method is most suited for software defined radio's digital receivers comprising a plurality of means for receiving packetised data (analogue front end), connected to a corresponding antenna; a plurality of first processing modules for packet detection, each comprising a first programmable processor, said first processing modules having the same architecture; a second processing module for demodulation and packet decoding comprising a plurality of programmable processing paths; a first digital receive controller comprising a third processor arranged for being notified of detection of data by said first processing modules and for activating said second processing module, in particular when adapted with extra hardware for symbol reordering by providing that each of said first processing module comprises as many reordering memories as there are antenna's for buffering data packets. A digital receiver as described above, has in each of said first processing modules means (bus and direct memory access controller) for data transfer to said second module, said data transfer in accordance with the symbol grouping and splitting method as described above.

### Brief Description of the Drawings

Fig. 1 represents the input and output.

Fig. 2 illustrates the block diagram of the application instance.

Fig. 3 illustrates an instance of a platform on which an application is parallelized.

Fig. 4 illustrates a two antenna split parallelization and dependencies when splitting the application into two threads: This belongs to the prior art.

Fig. 5 illustrates an odd-even symbol split (modulo-2 split) according to the present invention.

Fig. 6 illustrates the halt ISR and the VLIW ISR for ADRES1.

Fig. 7 illustrates the reordering of the incoming data in the DFE reordering buffers.

### Detailed Description of Embodiment(s)

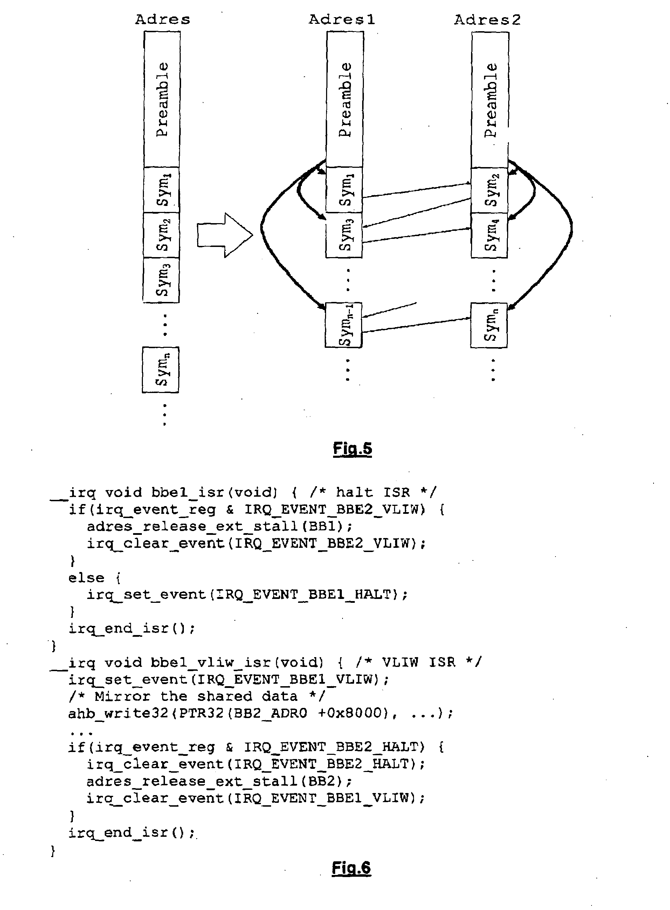

The present invention proposes a parallelisation procedure with a modulo-N symbol splitting, whereby the stream is decoded per OFDM symbol. The invention is explained below using the example of N=2, i.e. with two processes running in parallel. In this case the parallelisation procedure is performed with an odd-even split. To be more precise, odd symbols are decoded on one ADRES processor and even symbols are decoded on the other ADRES processor. As for the per antenna based split, the per symbol (or per group of symbols) based split is advantageous for coarse grain parallelization. The odd-even split option needs to communicate only 10 bytes per one OFDM symbol decoding and is clearly more beneficial (see Fig. 5). Again, during real-time demodulation/decoding, the bandwidth needed for the communication is 10/4=2.5 MB/s, i.e., less than 1% of the bandwidth of the bus.

Thus, there are clear benefits in applying an odd-even symbol split with respect to the communication. In both the per antenna based split as discussed above and the odd-even split of the invention, it is assumed that the preamble decoding is duplicated, i.e., the preamble is computed on all (i.e. both in the case of N=2) ADRES processors. Alternatively, it would be also possible to compute the preamble on one ADRES processor only, which yields the advantage of saving the energy by powering down the second ADRES processor. However, this requires communicating the time offset, the CFO and the MMSE equalizer matrix to the other ADRES processor, which leads to the trade-offs between the computation and communication.

The odd-even symbol split is not restricted to individual symbols. The odd-even symbol split can also mean splitting the symbol decoding to odd groups of symbols and even groups of symbols where the group contains 1, 2, 4 or 8 (or another number) of symbols. E.g., for group of 4 this would mean that the first group of four symbols (symbol 1-4) is decoded on ADRES1, the second group of four symbols (symbols 5-8) on ADRES2, the third group of four symbols (symbols 8-12) on ADRES1 etc. To perform the decoding of larger group of symbols on one ADRES allows more fine-grain Instruction Level Parallelization (ILP) within one ADRES (as discussed in the following paragraph) and helps achieving real-time behaviour. However, it also enlarges the critical part of the programme the other ADRES has to wait for. Note that when having group of four, instead of waiting for tracking of one symbol when having group of one, one has to wait till the tracking of symbol 1-4 is finished to pass the information to the other ADRES. In the remaining part of the description, the terms 'odd' and 'even' symbol split are used. However, note that, as explained, this can be also odd-even group of symbol split as discussed in this paragraph.

Note that except for the coarse grain parallelization on two processors, a more fine grain parallelization is also possible (e.g., half of the symbol etc.). However, due to various data dependencies, which may cause a large communication overhead this type of parallelism is more suitable for multi-threading within one ADRES processor than for a split on two separate ADRES processors. The place of such a parallelization is preferably between the Instruction Level Parallelism (ILP) exploited by the Coarse Grain Array (CGA) and the (coarse) Task Level Parallelism (TLP) such as antenna or symbol split.

The modelling is an important step to verify the correct functionality of the proposed parallelization before going to the platform. To model the parallelization, more sophisticated frameworks known in the art can be used, such as MPSoC Parallelization Assistant (MPA) (EP 1785875, US 2007/174829), Sprint (EP 1569104, US 2005/188364) or OpenMP or more fine grain modelling such as POSIX pthread library or the environment described in US 6952825 or EP 1022654. It is preferable to use more fine grain modelling, i.e. the POSIX pthreads, to model the parallelization procedure proposed in the invention. However, using any of the above mentioned frameworks is also a valid modelling solution.

The two parts of the decoding for the two ACRES processors (for odd and even symbols where the preamble is duplicated for both ADRES processors) (see Fig.5) are modelled as two pthreads joining at the very end when all CFO, SNR, channels and modes are tested. The code requires synchronization for the tracking part, where three variables, two integers (4 bytes) and one short integer (2 bytes) have to be communicated per symbol from one ADRES code to the other, resulting in 10 bytes per symbol communication. The communication occurs via the shared memory, where those three variables are placed. The shared memory is used for simplification in this model. On the platform there is no shared memory and thus the data have to be copied from one ADRES to the other each time they are needed (mirroring). The parallel model created with the POSIX pthreads can run on native UNIX.

Now is explained how to go from the code used for modelling the above-described parallelization to the mapping on the platform. It is explained how to implement the communication, what has to be changed in the ADRES codes and provide the insight on the ARM master code.

As the ARM processor is the only master in the system, it is the only system part taking care of the communication. The only thing the two ADRES processors can do, when they need to communicate, is to send an interrupt to the interrupt controller. The ADRES processors can send two types of interrupt, the halt interrupt and the VLIW interrupt. The halt interrupt, when sent, halts the ADRES from continuing the execution of the program. The VLIW interrupt, when sent, does not stop ADRES from executing the program. Those two interrupts fit the needs for implementing the sem_wait statement and sem_post statement used during modelling of the parallelization in native UNIX environment when using POSIX pthreads. Naturally, halt interrupt maps to sem_wait and VLIW interrupt maps to sem_post.

Note that the two ADRES processors do not have shared data memory space as is assumed in the above model. Thus, each time the VLIW interrupt is triggered, the shared data are mirrored (copied) from one ADRES processor to another one. Because the ARM is the master on the bus, the mirroring is done in the instruction service routine (ISR) of the appropriate VLIW interrupt and thus ARM takes care of the copying. The data are mirrored before the ADRES is released from the halt state. The VLIW interrupt has higher priority compared to the halt interrupt. In the proposed parallelization only 10 bytes are copied when VLIW interrupt occurs, i.e., once for each OFDM symbol decoding.

The ADRES code requires minimalistic changes when mapped on the platform. One just needs to create a separate program for each ADRES thread. Adres1_thread() is main() for ADRES1 and Adres2_thread() is main() for ADRES2. It is also needed to replace the sem_wait and sem_post calls to halt() and gen_int() calls respectively. Note that gen_int() just writes 1 to certain memory location triggering the VLIW interrupt and halt() halts the processor and triggers the halt interrupt.

The communication between the ADRES processors is fully controlled by the ARM controller. At the beginning of the main(), the platform is initialized and the two ADRES processors are released. Both ADRES processors stop at the halt() call. Here, ADRES1 should be released to start the decoding.

Let us now have a closer look at the ADRES interrupt service routines (ISR) that ensure the communication, i.e., the VLIW ISR and halt ISR (see Fig. 6). As already mentioned, when halt interrupt is triggered, the ADRES is halted. The ISR for halt interrupt ensures, that when there was an VLIW interrupt before, the ADRES is immediately released (because the shared data have been already copied by the ISR of VLIW interrupt). If there was not an VLIW interrupt before, the halt event is set. ADRES is then in the waiting state.

When VLIW interrupt occurs, the ISR for VLIW interrupt starts with mirroring of the memory locations where the shared data are located. If other ADRES is in waiting mode, it is released after the copying. Otherwise, just VLIW event is set. This event will be encountered/caught later, when other ADRES achieves the halt state.

The 40 MHz MIMO SDM-OFDM parallelized code runs on the platform. The code has been split into two parts, first one decoding the odd symbols and second one decoding the even symbols. Both parts decode also the preamble. The correct functionality of the code is verified by modelling the two parts using POSIX threads on native UNIX system. Only one synchronization point is needed in the tracking part. This synchronization is modelled by using POSIX semaphores and shared memory space. This split is ported to the platform where the* synchronization is ensured by using the two ADRES interrupts that the platform provides and by mirroring of the shared memory space.

**Table 1: Comparison of the results for the sequential code (on the AVM) and parallel code (on the platform) for different test streams**

| Streams | *Sequential code* | | | *Parallel code* | | | | | | | |
|---|---|---|---|---|---|---|---|---|---|---|---|
| | [×10⁶ cycles] | | | [× 10⁶ cycles] | | | | | | | |
| | | | | ADRES1 | | | | ADRES2 | | | |
| | VLIW | CGA | ∑ | VLIW | CGA | stalls | ∑ | VLIW | CGA | stalls | ∑ |
| One BPSK stream (111 symb) | 18.17 | 0.10 | 18.27 | 8.43 | 0.05 | 0.10 | 8.58 | 8.51 | 0.05 | 0.09 | 8.65 |
| One QPSK stream (57 symb) | 10.99 | 0.05 | 11.04 | 5.22 | 0.03 | 0.05 | 5.30 | 5.27 | 0.03 | 0.05 | 5.35 |
| One QAM-16 stream (30 symb) | 6.47 | 0.03 | 6.50 | 3.37 | 0.02 | 0.03 | 3.42 | 3.20 | 0.01 | 0.03 | 3.23 |
| One QAM-64 stream (21 symb) | 4.96 | 0.02 | 4.98 | 2.63 | 0.01 | 0.02 | 2.65 | 2.65 | 0.01 | 0.02 | 2.68 |
| All 360 streams (111, 57, 30, 21 symb) | 3658.4 | 18.3 | 3676.7 | 1769.3 | 9.5 | 18.4 | 1797.2 | 1765.4 | 9.4 | 17.4 | 1792.2 |

In Table 1 different cycle counts obtained for different modes are shown as well as overall cycle count for all 360 streams. The results obtained in Table 1 are analyzed below.

For less demanding modes (BPSK, QPSK) the sum of the cycle counts for AVM1 and AVM2 for parallel version is less than the cycle count for sequential version, i.e., AVM1 + AVM2 < AVM (94.3% for BPSK). For more demanding modes (QAM-16, QAM-64) the sum of the cycle counts for AVM1 and AVM2 for parallel version is more than the cycle count for sequential version, i.e., AVM1 + AVM2 > AVM (107.0% for QAM-64). Specializing the different threads to odd and even symbol decoding has enabled better constant propagation in the compiler resulting in better cycle counts for parallel version. During testing, the less demanding modes (BPSK, QPSK) decode also more symbols (108, 54) as compared to more demanding modes (27, 18). Thus the time spent in the symbol decoding is shorter for more demanding modes. For more demanding modes (QAM-16, QAM-64) the effect of the constant propagation is masked by the preamble decoding.

As one is not focusing on the coarse grain array mapping and exploiting the Single Instruction Multiple Data (SIMD), the CGA cycles are only 0.5% in average (for the all 360 streams, i.e., 5th row in the Table 1) of total cycles. The only part that is mapped on the CGA is the 128 point FFT.

The average (for all 360 streams) number of stalls is 1.1 %. The cause for the stalls is the communication between the ADRES processors. Even more parallelism can be exploited by using SIMD within the processors, e.g by arranging that the functional unit with the CGA processes simultaneously data originating from the different antennas. The use of SIMD is described in more general terms in EP 1701250, US 2006/212685.

In what preceded the low communication parallelization solution was demonstrated for the 40 MHz MIMO SDM-OFDM code running on the multi-processor SDR platform. The odd-even symbol based spit was demonstrated for a platform instance with only 2 processors. This split can be generalized when going to N processor platform to modulo N split, where each i ^{th} symbol is mapped on i mod N processor, where i is the sequential order of the symbol and N is number of processors.

From the results one can see that the parallel version consumes approximately half of the cycles of the sequential version. Still, the parallelized code has some overhead due to duplication of the preamble decoding and due to the communication between the two ADRES processors. The communication (via the bus) is due to the dependency in the tracking kernel and is managed by the ARM processor.

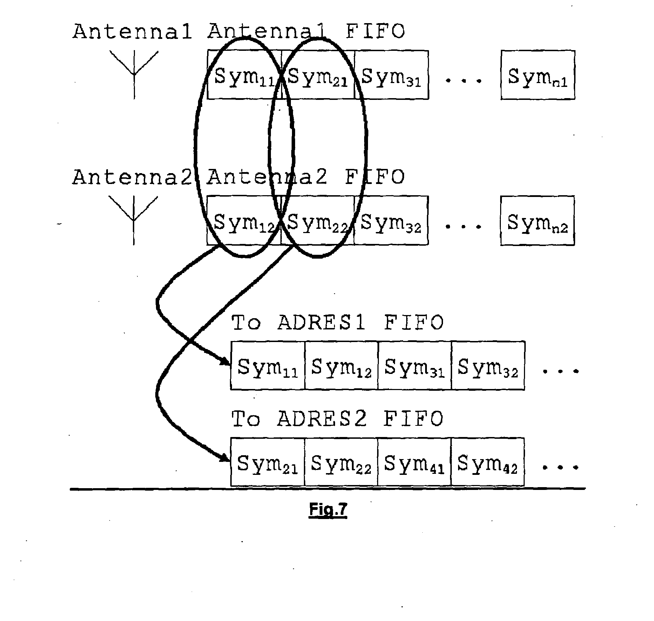

The symbols are processed in the digital front-end (DFE) in sequential order and they are distributed over the bus to the ADRES processors. To be able to transfer the symbols in bursts they are preferably reordered already in the DFE, as illustrated in Fig.7. The DFE has only one FIFO like buffer. For the proposed parallelization two FIFO buffers (storing odd and even incoming symbols) would enable the burst communication over the bus. The modulo N split (when having N ADRES processors) would require N FIFO buffers in the DFE tiles.

It is also possible to fully get rid of the dependency in the tracking part. This requires an algorithmic change where the tracking is implemented based on the odd and even (or modulo N) symbols only. Then the odd and even symbol (modulo N) decoding threads would be fully independent and there is no communication between the two (or N) ADRES processors at all. However, this most probably degrades the Bit Error Rate (BER) curves. This solution is a viable point in the trade-off between the performance (communication overhead) and the accuracy of the decoding.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device for demodulating a stream of data symbols being part of a multicarrier data stream, said device comprising a platform capable of running processes in parallel, whereby on said platform a parallel code is mapped for demodulating said data symbols, said parallel code being arranged for determining from at least one previously processed symbol information for demodulating a currently processed data symbol of said multicarrier data stream, **characterised in that** said device further comprises parallelisation means for parallelising symbols or groups of symbols of said stream of data symbols code according to a modulo-N symbol splitting of said stream of data symbols, N being the number of processes that can run in parallel on said platform, said parallelisation means further being arranged for applying said parallelised stream to said parallel code.

2. Device for demodulating as in claim 1, wherein said platform comprises at least two programmable processors.

3. Device for demodulating as in claim 1, wherein said platform comprises a programmable processor arranged for multi-threading.

4. Device for demodulating as in claim 2, wherein at least one programmable processor is arranged for multi-threading.

5. Device for demodulating as in any of claims 1 to 4, wherein the platform is arranged for applying single instruction multiple data processing.

6. Device for demodulating as in any of the previous claims, wherein said code for demodulating is part of a wideband-CDMA transmission protocol.

7. Device for demodulating as in any of the previous claims, wherein the platform further comprises at least one processing module for detecting packets of said received data symbols.

8. Device for demodulating as in claim 7, wherein said at least one processing module is provided with buffering means for storing a portion of the parallelised stream.

9. Device for demodulating as in any of the previous claims, wherein the platform further comprises a general purpose processor arranged for acting as master of the platform.

10. Method of demodulating multi-carrier data received as a plurality of signals, each signal originating from a separate antenna, each signal comprising a set of symbols to be demodulated, said method comprising the steps of
- dividing said sets of symbols to be processed into a plurality of symbol groups, each symbol group comprising symbols of at least two of said sets;
- demodulating said symbol groups in different processing paths and communicating carrier tracking information from a first processing path to a second processing path, said carrier tracking information being obtained by at least partially demodulating a first symbol group in a first processing path, a second symbol group being demodulated in said second processing path.

11. Method of demodulating as in claim 10, whereby said demodulating of said symbol groups in at least one of said processing steps, further comprising at least partially demodulating symbol groups of different signals in different subprocessing paths (SIMD).

12. Method of demodulating as in claim 11, whereby each of said processing paths is provided with buffering means for storing a portion of said symbols.

13. Method of demodulating as in claim 10 to 12, executed on a coarse grain reconfigurable signal processing device.

14. Method of demodulating as in claim 13, whereby said coarse grain reconfigurable signal processing device is arranged into a device with at least two non-overlapping processing units, each processing unit defining a processing path.

15. Method of demodulating as in claims 13 or 14, wherein said carrier tracking information is communicated within said coarse grain reconfigurable signal processing device.
